# EUROPEAN PATENT SPECIFICATION

(11) **EP 2 341 661 B1**
(45) Date of publication and mention of the grant of the patent: **21.03.2012**
(21) Application number: 10290001.6
(22) Date of filing: 04.01.2010
(51) Int. Cl.: H04L 12/24

(54) **Neighbour discovery for ethernet private line on user network interfaces**
Nachbarschaftserkennung für private Ethernet-Leitung an Benutzernetzwerkschnittstellen
Découverte de voisinage pour ligne Ethernet privée sur des interfaces de réseau d'utilisateur

(43) Date of publication of application: 06.07.2011
(73) Proprietor: Alcatel Lucent, 75007 Paris (FR)
(72) Inventor: Grammel, Gert, 71254 Ditzingen (DE); Levrau, Lieven, 78141 Velizy (FR)
(74) Representative: Schmidt, Werner Karl

(56) References cited:
- WO-A1-03/085543
- US-A1- 2008 095 171
- TAKACS A ET AL: "GMPLS controlled ethernet: an emerging packet-oriented transport technology" IEEE COMMUNICATIONS MAGAZINE, IEEE SERVICE CENTER, PISCATAWAY, US LNKD- DOI:10.1109/MCOM.2008.4623716, vol. 46, no. 9, 1 September 2008 (2008-09-01), pages 118-124, XP011234297 ISSN: 0163-6804
- DON FEDYK ET AL: "GMPLS control of Ethernet; draft-fedyk-gmpls-ethernet-pbt-01.txt" IETF STANDARD-WORKING-DRAFT, INTERNET ENGINEERING TASK FORCE, IETF, CH, no. 1, 1 October 2006 (2006-10-01), XP015047596 ISSN: 0000-0004

## Description

The present invention relates to the field of telecommunications and in particular to Optical Transport Networks, OTN, or Synchronous Digital Hierarchy, SDH, networks. Still more particular, the present invention relates to neighbor discovery when connecting a client layer network device, e.g. a router or a switch, via Ethernet to a SDH device, or an OTN device such as an OTN cross-connect. Still more particular, the present invention relates to a method for auto-discovery of neighbors in an optical network, a system for auto-discovery of neighbors in an optical network, an transport network node, in particular an OTN cross-connect, and a client layer node that is connected via an Ethernet connection to the transport network node.

Procedures for neighbor discovery are defined in several standards. For example, in the Generalized Multi Protocol Label Switching, GMPLS, standard by the Link Management Protocol, LMP, and in the Architecture for Automatically Switched Optical Networks, ASON, standard by its auto-discovery procedure. Both standards can be used for controlling Synchronous Digital Hierarchy, SDH, Synchronous Optical Networking, SONET, or OTN networks.

For more information regarding Ethernet, LMP, and ASON auto-discovery reference is made to the following documents, the contents of which are incorporated herein by reference. For Ethernet see IEEE 802.3-2000 entitled IEEE Standard for Carrier Sense Multiple Access with Collision Detection (CSMA/CD) Access Method and Physical Layer Specifications". For LMP see RFC 4204 entitled "Link Management Protocol" (LMP) and RFC 4207 entitled "Synchronous Optical Network (SONET)/Synchronous Digital Hierarchy (SDH) Encoding for Link Management Protocol (LMP) Test Messages" of the Internet Engineering Task Force, IETF. For ASON auto-discovery see ITU-T G.7714 entitled "Generalized automatic discovery for Transport Entities" of the International Telecommunication Union, ITU.

For more information regarding GMPLS, reference is made to the following documents: "GMPLS controlled ethernet: an emerging packet- oriented transport technology" by TAKACS A ET AL, published in IEEE COMMUNICATIONS MAGAZINE, IEEE SERVICE CENTER, PISCATAWAY, US LNKD- DOI:10.1109/ MCOM.20.08.4623716, vol. 46, no. 9, 1 September 2008 (2008-09-01), pages 118-124; and "GMPLS control of Ethernet; draft-fedyk-gmplsethernet-pbt-01.txt" by DON FEDYK ET AL, published in IETF STANDARD-WORKING-DRAFT, INTERNET ENGINEERING TASK FORCE, IETF, CH, no. 1, 1 October 2006 (2006-10-01). Furthermore, patent document WO 03/085543 A1 describes methods to discover and track the topology of a network, including polling network elements and the ability to trace a route or service within a network.

However, there does not exist a neighbor discovery procedure when connecting a client layer network device via Ethernet to an transport network device such as an OTN cross-connect, as the current generation of transport network devices is not enabled to generate or parse Ethernet data packets for discovery purposes. This is because all data received by the transport network device's Ethernet interface is mapped transparently in a multiplex unit (e.g. an Optical Data Unit, ODU) forwarded in the optical network and vice versa. A transport network device is therefore not enabled to decode or generate messages which contain, for example, Internet Protocol, IP, addresses and port numbers. In other words, a transport network device as of today has no means to insert something into the Ethernet interface such that discovery, as for example between two GMPLS enabled OTN cross-connects, could run successfully between the transport network device and the Ethernet device.

This is disadvantageous in networks where, for example, a local device is connected via transport network cross-connects to a remote device. In such a network, it is currently not possible for the local device to find out how the ports of the local device are connected to the ports of a cross-connect and how a data packet is forwarded over the cross-connects to the remote device, thereby hardening network diagnosis and maintenance.

There is therefore a need to enable automatic neighbor discovery between a transport network device and client layer device which are connected via Ethernet.

In an aspect, there is provided a method in an optical network, wherein a client layer device is connected over an Ethernet connection or link to an transport network device, the transport network device transparently mapping Ethernet packets to multiplex units and vice versa. The method comprises: determining, by a first of the devices (i.e. the transport network device or the device that is connected via the Ethernet connection to the transport network device), that a port of the transport network device is connected via the Ethernet connection to a port of the client layer device; and sending, by the first device, a link configuration pattern over the Ethernet connection to the other of the two devices (i.e. second device), the link configuration pattern being one of: a predetermined bit sequence, an invalid Ethernet packet and a valid Ethernet packet, the link configuration pattern containing an identifier (ID) identifying the first device and a port identifier, e.g. port number, identifying the port of the first device, wherein an invalid Ethernet packet is a packet that would normally be discarded according to the Ethernet protocol. Thus, the second device receives information regarding the device ID and the port number of the first device.

The method may continue by: receiving, by the second of the devices, the link configuration pattern; determining, by the second device, the ID identifying the first device and the port number identifying the port of the first device from the link configuration pattern; and sending, by the second device, a further link configuration pattern to the first device, the further link configuration pattern being one of: a bit sequence, an invalid Ethernet packet and a valid Ethernet packet, the link configuration pattern containing an ID identifying the second device and a port number identifying the port of the second device. Thus, the first device receives information regarding the ID and the port number of the second device.

The first device may be an Optical Transport Network, OTN, device and the second device may be the client layer device that is connected via the Ethernet connection with the OTN device. In this case, the auto-discovery procedure is initiated by the OTN device. However, the auto-discovery procedure may very well be started by the client layer device (first device) that Is connected via the Ethernet connection to the OTN device, in which case the OTN device is the second device.

The suggested methods and systems may be applied to Synchronous Digital Hierarchy, SDH, networks as well and enable discovering adjacencies in the SDH network. In case of SDH, the multiplex units are named Virtual Container (VC-N) and the transport nodes are SDH devices.

In the following, it is assumed that the first device is the OTN device. This is, however, not essential and the roles of both devices can be exchanged. The method then starts with the OTN device determining whether a port of the OTN device is connected via the Ethernet connection to a port of the client layer device. The OTN device then sends a link configuration pattern over the Ethernet connection to the device that it is connected to. The link configuration pattern may be one of: a predetermined bit sequence, an invalid Ethernet packet and a valid Ethernet packet. The link configuration pattern contains a device ID identifying the OTN device such as an IP address and a port number identifying the port of the OTN device.

The above method enables an OTN device to send its ID and port number to another device over Ethernet so that the other device is provided with information regarding the connection between the ports of the OTN device and the device. In other words it is proposed is to distinguish between a failed ODU in the OTN cross-connect and a non-connected Ethernet. In case of a failed ODU, a link configuration pattern, also called link configuration pattern, is inserted into the physical link Ethernet link.

In order for the receiver to identify a received link configuration pattern, the link configuration pattern is preferably marked or in another way distinguishable from regular data packets. For example, a predetermined bit sequence may include a defined bit pattern that identifies the bit sequence as a link configuration pattern. An invalid Ethernet packet is normally discarded, but in the context of link configuration, the received packet may be interpreted as link configuration pattern, depending on the state the device is in when receiving the packet. A valid Ethernet packet preferably includes a predefined identifier to mark the packet as link configuration pattern. In any case, the received link configuration pattern should be handled separately from regular data packets and not propagated beyond the link segment.

The link management method may be continued as follows. The client layer device receives the link configuration pattern sent by the OTN device over the port of the OTN device. The device then determines the ID identifying the OTN device and the port number identifying the port of the OTN device from the link configuration pattern. In response to receiving the link configuration pattern or when configured by network management, the client layer device itself sends a further link configuration pattern over its port to the OTN device. The further link configuration pattern may be one of: a predetermined bit sequence, an invalid Ethernet packet and a valid Ethernet packet. The further link configuration pattern contains an ID identifying the device such as an IP address and a port number identifying the port of the device.

By responding to the link configuration pattern of the OTN device by sending the further link configuration pattern, the client layer device enables the OTN device to gain insight to which device and to which port of the device the port of the OTN device is connected. Accordingly, the OTN device may further receive the further link configuration pattern sent by the device over the Ethernet connection and determine the ID identifying the device and the port number identifying the port of the device.

In embodiments, the link configuration pattern and/or the further link configuration pattern may be a series of one of: a predetermined bit sequence, an invalid Ethernet packet and a valid Ethernet packet wherein every element of the series contains the required information: By sending the same information multiple times the loss of an element of the series does not necessarily lead to a failed discovery procedure and the requirements for link configuration pattern/further link configuration pattern discovery as well as real-time data processing capabilities may be reduced.

Furthermore, the neighbor discovery method may comprise that the OTN device generates the link configuration pattern, e.g. by means of a bitstream pattern generator. In other words, the method enables OTN devices which transparently map Ethernet packets to ODU containers and vice versa are, as discussed above, to generate link configuration pattern containing the OTN device ID and port number.

Moreover, the neighbor discovery method may comprise that the client layer device generates the further link configuration pattern. In this case, a device such as a router does not simply forward Ethernet packets but responds to the received link configuration pattern by generating the further link configuration pattern. Accordingly, the client layer device needs to know which kind of further link configuration pattern namely a bit sequence, an invalid Ethernet packet or a valid Ethernet packet can be decoded by the OTN device.

The method for discovery of adjacencies may further comprise that the client layer device and/or the OTN device store the ID identifying the OTN device, the port number identifying the port of the OTN device and/or the ID identifying the device, and the port number identifying the port of the device in a register. By then, both devices have full knowledge which port of the OTN device is connected to which port of the device. As a result, the network topology is fully known to the devices.

In embodiments, the method may be started after determining that the OTN device is being configured and not in operation. A configuration mode may be detected by detecting that none of the ports of the OTN device is connected to another OTN device. The reason for this is that there is a need to avoid that the discovery of nodes through the sending and receiving of link configuration pattern is performed during a normal operation mode. The discovery should not block the transmission of data from another OTN device to the Ethernet network.

Furthermore, the method may determine whether the ID identifying the OTN device and the port number identifying the port of the OTN device which were received by the OTN device with the further link configuration pattern correspond to the ID identifying the OTN device and the port number identifying the port of the OTN device which were sent by the OTN device. If they do correspond it may be assumed that the device received and transmitted the ID and the port number of the OTN device correctly. In this case, the method may enable the Ethernet connection for data traffic.

In another aspect, there is provided a transport network device in an optical network. The transport network device and a client layer device are both connected over an Ethernet connection, The transport network device transparently maps Ethernet packets to multiplex units and vice versa. The transport network device may be an OTN device and the multiplex units may be Optical Data Units. Alternatively, the transport network device may be an SDH device and the multiplex units may be Virtual Containers. The transport network device may comprise a first multitude of ports where a port of the first multitude of ports is connected by the Ethernet connection to the client layer device, a second multitude of ports provided for establishing at least one optical link to at least one other transport network device, and a link configuration pattern generator coupled to the first and second multitude of ports. The link configuration pattern generator may be configured to determine whether a signal is received at the port of the first multitude of ports, and configured to control the port of the first multitude of ports to send a link configuration pattern. As described above with reference to the neighbor discovery method, the link configuration pattern may be one of: a predetermined bit sequence, an invalid Ethernet packet and a valid Ethernet packet

The OTN device may have at least one port connected over Ethernet to the client layer device, and sends its ID and the port identifier (e.g. number) over the Ethernet connection to the client layer device, thereby providing the client layer device with information regarding the connection between the ports.

The client layer device may further comprise a port connected by the Ethernet connection to the port of the first multitude of ports of the OTN device, and a link configuration pattern handler coupled to the port of the device. Said link configuration pattern handler is configured to determine whether the link configuration pattern is being received at the port of the client layer device, and, if this is the case, configured to determine the ID identifying the OTN device and the port number identifying the port of the OTN device. A further link configuration pattern generator configured to control the port of the client layer device to send a further link configuration pattern may be provided.

When the link configuration pattern is received, the client layer device may extract the ID and the port identifier (number) of the OTN device and responds with a further link configuration pattern containing the ID and the port number of the device in order to let the OTN device know, how the ports of the device and the OTN device are connected.

Moreover, the OTN device may comprise a further link configuration pattern handler configured to determine whether the further link configuration pattern is being received at the port of the OTN device, and, if this is the case, configured to determine the ID Identifying the device and the port number identifying the port of the device.

When the further link configuration pattern is received by the OTN device, the OTN device can extract from the further link configuration pattern information of how the ports of the device and the OTN device are being connected.

In embodiments, the client layer device may be an Ethernet router or Ethernet switch. The transport network device may be an OTN device, e.g. an OTN cross-connect, or an SDH device.

In the above explanation, the auto-discovery process is initiated by the transport network (OTN or SDH) device. As already explained, it may also be initiated by the client layer device, in which case the link configuration pattern generator is provided in the client layer device and the further link configuration pattern generator (if present) is provided in the OTN device. The invention therefore relates to the client layer device, too, in combination with the OTN device, or separately therefrom.

The proposed method and system enable neighbor discovery between a client layer device and an OTN device such as an OTN cross-connect which are connected via Ethernet, thereby facilitating network diagnosis and maintenance.

It should be noted that the above mentioned aspects may be combined with one another or extracted from one another in various ways. In particular, all possible claim and feature combinations are considered to be disclosed by the present document. Furthermore, the aspects and features outlined in relation with a system are equally applicable in relation to the corresponding method.

Further advantages of the invention will become apparent when considering the following detailed description of the preferred embodiments in connection with the attached figures.

In the figures:
Figure 1 illustrates schematically the connection of a device to an OTN cross-connect;
Figure 2 illustrates schematically how an OTN cross-connect sends a link configuration pattern that contains an ID and a port number;
Figure 3 illustrates schematically how a device receives the link configuration pattern containing an IP address und a port number and responds by sending a further link configuration pattern containing at least one ID and at least one port number;
Figure 4 Illustrates schematically how an OTN cross-connects receives the further link fault pattern, and
Figure 5 illustrates schematically a Gigabit Ethernet frame.

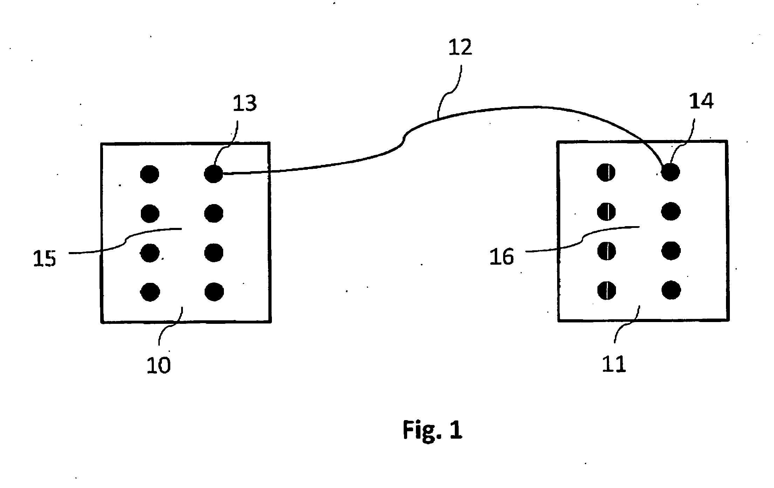

Figure 1 shows a network configuration including a local client layer device (10) and a local OTN or SDH cross-connect (11). Therein, the local client layer device (10) such as a router or a switch may be connected via Ethernet or more precisely over Ethernet protocol to the local OTN/SDH cross-connect (11). More particularly, there may exist a physical link (12), e.g. an optical link, which connects a port (13) of the local client layer device over a cable, e.g. fiber optic, to a port (14) of the local OTN/SDH cross-connect (11). In case of an optical link, every port may be equipped with a light source and a photodetector, e.g. a Light Emitting Diode, LED, or a laser diode, in order to send or receive light pulses. When the connection between the client layer device (10) and the OTN/SDH cross-connect (9.1) is established, which can be determined for example by receiving a signal over the physical link (12), e.g. light of a specific wavelength, a neighbor discovery procedure may be started.

In Figure 1, only the connection of the client layer device (10) and the OTN/SDH cross-connect (11) is shown. However, it is clear that the client layer device (10) may be connected to other devices and that the OTN/SDH cross-connect (11) is provided for connection to other OTN/SDH cross-connects and/or other devices. In a network configuration based on the network configuration as shown in Figure 1 and with an additional element of a remote OTN/SDH cross-connect which is connected to the local OTN cross-connect (11), the local OTN/SDH cross-connect (11) may transparently map Ethernet data packets from the local client layer device (10) into Optical Data Units, ODU, (or Virtual Containers in case of SDH) and send them as a bit stream to the remote OTN/SDH cross-connect and vice versa.

Although exemplary embodiments are described in regard to two ports being connected via an optical link, it should be clear to a person skilled in the art of optical networks that not only one port (13) of the client layer device (10) may be connected to one port (14) of the OTN/SDH cross-connect but it may well be that a multitude of ports (15) of the client layer device (10) may be connected to a multitude of ports (16) of the OTN/SDH cross-connect (11). It should be furthermore clear that although the embodiments are described with regard to an OTN/SDH cross-connect, this shall not be understood as to limit the invention to OTN/SDH cross-connects, as it can be applied to any OTN/SDH device with an Ethernet interface which transparently maps Ethernet data packets to multiplex units and vice versa.

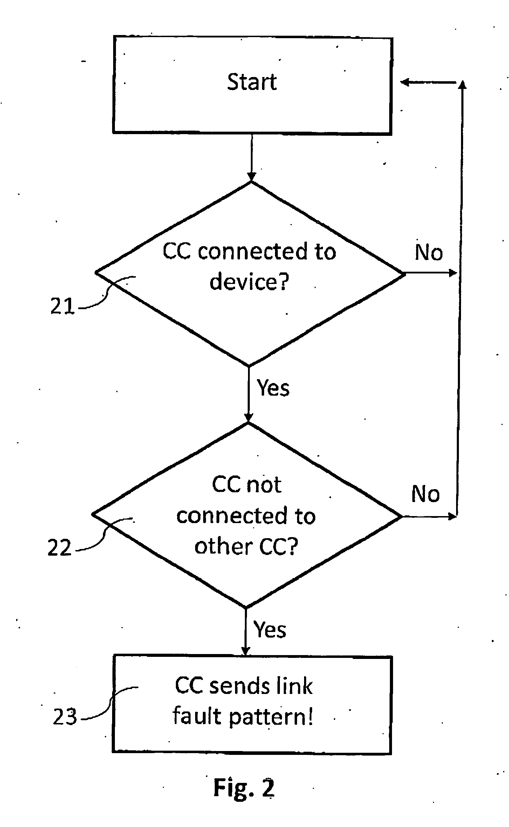

Figure 2 shows the first steps of an exemplary neighbor discovery procedure started by the local OTN cross-connect (11). After determining (21) that the local OTN cross-connect (11) is connected to the local client layer device (10) as described with reference to Figure 1, the local OTN cross-connect (11) determines (22) whether it is connected to a remote OTN cross-connect This can be achieved, for example, by checking on all ports of the local OTN cross-connect (11) that are provided for connection with remote OTN cross-connects whether signals, e.g. light of a specific wavelength, are being detected by the photodetectors. An alternative to actively checking the ports would be to maintain a data structure, e.g. a list, within the cross-connect (11), the list containing information which of the ports of the cross-connect (11) is connected and to update the list whenever the connection status of a port changes.

When the local OTN cross-connect (11) has determined (22) that it is not connected to a remote OTN cross-connect, the local OTN cross-connect starts to send (23) a link configuration pattern or link fault pattern over the port (14) that is connected via Ethernet to the port (13) of the local client layer device (10). The link fault pattern contains a device ID such as an IP address and a port number of the local OTN cross-connect (11). The port number identifies the port (14) that is connected via Ethernet to the port (13) of the local client layer device (10) and over which the link fault pattern is being sent.

In embodiments, in case of an unconnected Ethernet to ODU, a link configuration/fault pattern including an identifier is inserted into the physical link Ethernet link. This can be done in several ways:
1. Send a sequence of valid Ethernet packets containing the identifier. This allows the receiver to perform usual Ethernet packet processing and needs a defined identifier to indicate that the packet needs to be processed by the receiver.
2. Send a sequence of invalid Ethernet packets containing the identifier. Normally, invalid packets get discarded, but depending on the Ethernet receiver used, the content of the packet can be interpreted. This way the normal processing chain is not loaded with the 'discovery packets', i.e, the link fault pattern.
3. Embed the identifier in a fixed code sent to the router. The identifier is inserted in a bit-stream sent to the remote end. The bit stream is interpreted as non-functional connection, but the information contained can be used to transmit the link fault pattern.

Each possibility has individual merits but they share the same goal: to send a configurable but fixed pattern to the remote end. The remote end should be able to read this pattern, interpret it and send it via a potentially different communication line (DCN) back to the originating end. For example, the link fault pattern could use the same encoding format as for SDH section trace in RFC 4207.

In embodiments, the link fault pattern may be one or a series of predetermined bit sequences, every element of the series containing the device ID and the port number of the local OTN cross-connect (11). Heretofore, a predetermined bit sequence may be generated by the OTN cross-connect and stored in a buffer of the local OTN cross-connect (11).The predetermined bitstream preferably comprises a defined bit pattern that is known by the receiver to identify the bitstream to be a link fault pattern that includes the device ID and port number. After storing, the bit sequence may be modified by inserting the device ID and the port ID. The modified bit sequence may then be repeatedly sent (23) over the port (14) of the Ethernet interface of the local OTN cross-connect (11) to the local client layer device (10).

In embodiments, the link fault pattern may be one or a series of invalid Ethernet data packets, every element of the series containing the device ID and the port number of the local OTN cross-connect (11). Heretofore, an invalid Ethernet packet may be generated by the OTN cross-connect, stored in a buffer of the local OTN cross-connect (11) and repeatedly sent (23) over the port (14) of the Ethernet interface to the local client layer device (10).

In embodiments, the link fault pattern may be one or a series of valid Ethernet data packets, every element of the series, containing the device ID and the port number of the local OTN cross-connect (11). Heretofore, a valid Ethernet packet may be generated by the OTN cross-connect, stored in a buffer of the local OTN cross-connect (11) and repeatedly sent (23) over the port (14) of the Ethernet interface to the local client layer device (10).

By sending a series of identical bit sequences, invalid Ethernet data packets or valid Ethernet data packets, the processing at the remote end is simplified, since a bit sequence, invalid Ethernet data packet or valid Ethernet data packet can be lost without stopping the procedure and the information contained in the bit sequences, invalid Ethernet data packets or valid Ethernet data packets can be extracted over multiplex bit sequences, invalid Ethernet data packets or valid Ethernet data packets which reduces the requirements regarding real-time data processing capability. The elements of the series may be repeated periodically with a constant time interval, or according to a random time interval between elements.

Accordingly, the local OTN cross-connect (11) may be equipped with additional logic which controls the ports of the local OTN cross-connect (11) and is enabled to determine whether a port is connected and is enabled to generate at least one of the above specified link fault pattern. Such a link fault pattern generator may be build, for example, in form of an Application Specific Integrated Circuit, ASIC, or any other form of logic.

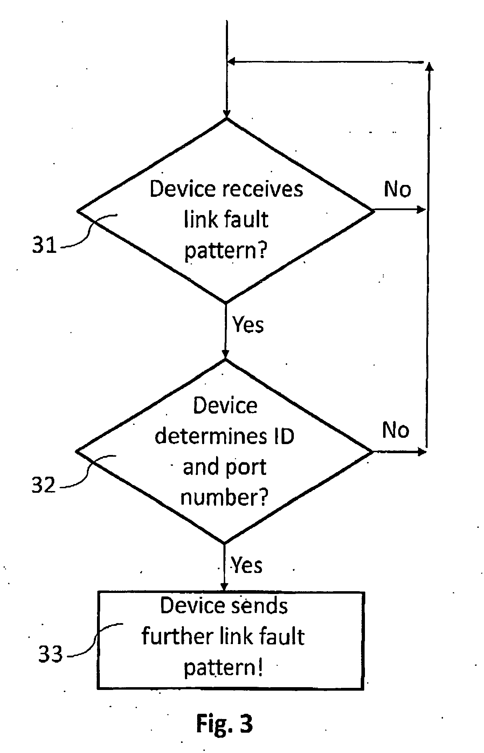

Figure 3 shows further steps of the neighbor discovery procedure regarding the client layer device (10). Therein, the client layer device (10) receives (31) on the port (13) a link fault pattern from the OTN cross-connect (11). After receiving the link fault pattern, the client layer device (10) determines (32) whether the link fault pattern contains the IP address and the port number of the OTN cross-connect (11).

In embodiments, the link fault pattern may be one or a series of predetermined bit sequences containing the device ID and the port identifier of the OTN cross-connect (11). Then, the client layer device (10) which expects valid Ethernet data packets may need additional logic for example a link fault pattern handler in order to discover and interpret the link fault pattern as a non-functional connection and to extract the device ID and the port number. Since the bit sequence is received multiple times, the link fault pattern handler may discover that a link fault pattern is being received from the fact that the bit sequence is repeated, has a specific length or that at least a part of the sequence follows a predefined bit scheme. Furthermore, the link fault pattern handler is required to know where in the link fault pattern the ID and the port number are contained. This may be accomplished for example by specifying the position of the ID and the port number within the bit sequence in advance.

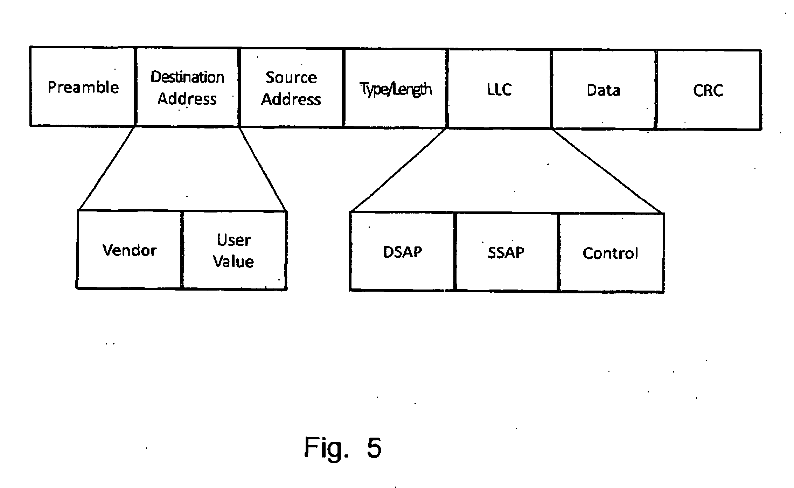

In embodiments, the link fault pattern may be one or a series of invalid Ethernet data packet. Accordingly, the client layer device (10) may contain additional logic, for example a link fault pattern handler, in order to determine that although the Ethernet data packet is an invalid Ethernet data packet, its content has to be interpreted in order to determine the device ID and the port number of the OTN cross-connect (11) which is transmitted with the link fault pattern. In order to discover that the invalid Ethernet data packet is a link fault pattern and has to be interpreted, the link fault pattern handler may for example listen for invalid Ethernet data packets which are received multiple times. As an alternative the link fault pattern may know the "defect" of the invalid Ethernet data packet, e.g. in which way it differs from a valid Ethernet data packet, in advance. Furthermore the client layer device (10) may need to know where in the invalid Ethernet data packets the ID and the port number are stored. For example, the client layer device (10) may know that the ID and the port number may be stored in the reserved bytes section of a Gigabit Ethernet "PAUSE" frame which will be discussed in more detail with reference to Figure 5.

In embodiments, the link fault pattern may be one or a series of valid Ethernet data packet. In this case, the client layer device (10) may be modified such that valid Ethernet data packets with a specific identifier may be detected and interpreted by the client layer device (10) in order to determine the device ID and the port number. The elements of the series may be repeated periodically with a constant time interval, or according to a random time interval between elements.

In order for the client layer device (10) to know which Ethernet data packets may have to be interpreted, the identifier assigned to these packets may be agreed upon in advance. Furthermore the client layer device (10) may need to know where in the Ethernet data packets the ID and the port number may be stored. As mentioned above, one possibility may be to store the ID and the port number in the reserved bytes section of a Gigabit Ethernet PAUSE frame.

The determined device ID and the port number of the OTN cross-connect (11) may then be stored in a register of the client layer device (10). This enables the client layer device (10) to know the connection of its port to the port of the OTN cross-connect and therefore facilitates network configuration, maintenance and diagnosis. Furthermore this information can be used in order to discover and alarm disconnections. Moreover, with this method less manual interaction by service personnel is required which may lead to cost reduction.

As a next step, the client layer device (10) may send (33) a further link fault pattern. The further link fault pattern may be a series of one of a bit sequence, an invalid Ethernet data packet or a valid Ethernet data packet over the port (13) to the OTN cross-connect (11).Every element of the series contains the IP address and the port number of the client layer device (10) and the IP address and the port number of the OTN cross-connect (11). Heretofore, a bit sequence, an invalid Ethernet data packet or a valid Ethernet packet may be stored in a buffer of the client layer device (10), modified by inserting the IP address and the port number of the client layer device (10) and sent (23) over the port (13) of the Ethernet Interface to the OTN cross-connect (11).

In embodiments, the further link fault pattern also contains the IP address and the port number of the OTN cross-connect (11) as received by the client layer device (10).The further link fault pattern may have the same structure regarding the identifier and place where the information is stored as the link fault pattern described above.

For receiving, storing and sending, the client layer device (10) may be equipped with additional logic, e.g. a link fault pattern handler/generator build in the form of an ASIC, which controls the ports of the client layer device (10) and is enabled to read the link fault pattern received by the port (13), to determine the IP address and the port number contained in the link fault pattern and to send the further link fault pattern which may contain the IP address and the port number of the client layer device (10) and possibly the IP address and the port number of the OTN cross-connect (11) over the port (13) to the OTN cross-connect (11).

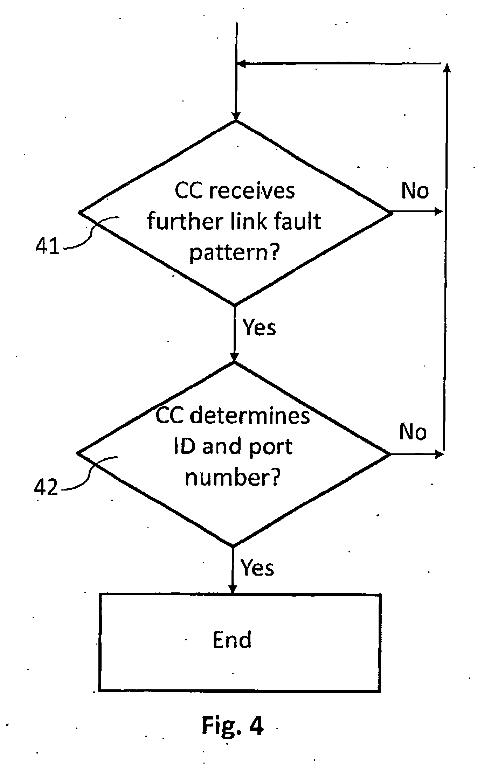

Figure 4 shows further steps of the neighbor discovery procedure regarding the OTN cross-connect (11). There, the OTN cross-connect (11) receives (41) over the port (14) the further link fault pattern from the client layer device (10) and determines (42) the IP address and the port number of the client layer device (10) and, if contained in the further link fault pattern, the IP address and the port number of the OTN cross-connect (11).

Heretofore, the OTN cross-connect (11) may be equipped with additional logic such as a further link fault pattern handler, which could be build for example in the form of an ASIC. More specifically, the OTN cross-connect (11) may be equipped with a further link fault pattern handler which is able to determine whether the received data corresponds to one of the above specified further link fault pattern, namely a repeated predetermined bit sequence, a repeated invalid Ethernet data packet or a repeated valid Ethernet data packet. In order to determine that received data corresponds to a further link fault pattern and in order to determine which parts of the further link fault pattern contain the required information, the further link fault pattern handler may use techniques corresponding to the techniques used by the link fault pattern handler described above.

When a further link fault pattern is received by the OTN cross-connect (11), the further link fault pattern handler in the OTN cross-connect (11) may store the content of a part of the further link fault pattern in a buffer. Furthermore, the further link fault pattern handler may determine the device ID and the port number of the client layer device (10) and if contained in the further link fault pattern, the device ID and the port number of the OTN cross-connect (11).

Alternatively, the further link fault pattern handler may determine the device ID and the port number of the client layer device (10) and the device ID and the port number of the OTN cross-connect (11) directly from the received further link fault pattern by synchronizing to the pattern and extracting only the part which contains information. In this regard it should be noted that when the further link fault pattern is a series of elements, the OTN cross-connect is not required to determine the information from one single bit sequence, invalid Ethernet data packet or valid Ethernet data packet, but may gather the information over several bit sequences, invalid Ethernet data packets or valid Ethernet data packets in the series. In other words, the information can be completed bit by bit over the whole series. This is especially advantageous, since, as already stated above, the OTN cross-connect does not have to have real-time data processing capabilities which would enable the OTN cross-connect to process a whole element of the link fault pattern. Furthermore, the OTN cross-connect can easily synchronize to the further link fault pattern as the same data is repeated over and over.

After determining the device ID and the port number of the client layer device (10), said information may be stored by the further link fault pattern handler in a register of the OTN cross-connect (11). The determined device ID and the port number of the OTN cross-connect (11) however, may be compared to the sent device ID and the port number of the OTN cross-connect (11), thereby enabling to check whether the client layer device (10) received and transmitted the information correctly. If said check shows that the information has not been received or transmitted correctly, the information may be deleted from the register. If said check shows that the information has been received and/or transmitted correctly the Ethernet connection (12) is enabled for data traffic.

In embodiments, the Ethernet connection (12) may be a Gigabit Ethernet connection. In Figure 5 a Gigabit Ethernet frame is shown. Gigabit Ethernet has been designed to adhere to the standard Ethernet frame format. Accordingly, a Gigabit Ethernet frame consists of a header containing the destination address and the source address as well as a length field identifying the length in bytes of the data field, the data field containing the payload and the checksum.

The addition of full-duplex mode to the Ethernet standard includes an optional flow control operation known as "PAUSE" frames. PAUSE frames permit one end station to temporarily stop all traffic from the other end station (except MAC Control frames).

For example, assume a full-duplex link that connects two devices called "Station A" and "Station B". Suppose Station A transmits frames at a rate that causes Station B to enter into a state of congestion (i.e. no buffer space remaining to receive additional frames). Station B may transmit a PAUSE frame to Station A requesting that Station A stop transmitting frames for a specified period of time. Upon receiving the PAUSE frame, Station A will suspend further frame transmission until the specified time period has elapsed. This will allow Station B time to recover from the congestion state. At the end of the specified time period, Station A will resume normal transmission of frames.

The format of a PAUSE frame conforms to the standard Ethernet frame format but includes a unique type field and other parameters as follows:

The destination address of the frame may be set to either the unique DA of the station to be paused, or to the globally assigned multicast address 01-80-C2-00-00-01 (hex), This multicast address has been reserved by the IEEE 802.3 standard for use in MAC Control PAUSE frames. It is also reserved in the IEEE 802.1D bridging standard as an address that will not be forward by bridges. This ensures the frame will not propagate beyond the local link segment.

The "Type" field of the PAUSE frame is set to 88-08 (hex) to indicate the frame is a MAC Control frame.

The MAC Control opcode field is set to 00-01 (hex) to indicate the type of MAC Control frame being used is a PAUSE frame. The PAUSE frame is the only type of MAC Control frame currently defined in the standard.

The MAC Control Parameters field contains a 16-bit value that specifies the duration of the PAUSE event in units of 512-bit times. Valid values are 00-00 to FF-FF (hex). If an additional PAUSE frame arrives before the current PAUSE time has expired, its parameter replaces the current PAUSE time, so a PAUSE frame with parameter zero allows traffic to resume immediately.

A 42-byte reserved field (transmitted as all zeros) is required to pad the length of the PAUSE frame to the minimum Ethernet frame size.

In embodiments, the device ID and the port number may be inserted in the 42-byte reserved field. For example, the IP address and the port number may be included in the reserved field. As an example for the used encoding, G.7714 may be used. As stated above, the link fault pattern generators and link fault pattern handlers may be implemented in the form of an ASIC that is normally used in the cross-connect and which converts between Ethernet and SDH. For generating link fault patterns the elements 'data code-group' and 'special code-group' may be used.

In embodiments, the following may be of relevance for implementing the ASIC:
• Data code-groups are coded and decoded but not interpreted by the PCS. Successful decoding of the data code-groups depends on proper receipt of the Start_of_Packet delimiter.
• Configuration ordered sets, defined as the continuous repetition of the ordered sets/C1/ and /C2/, are used to convey the 16-bit Configuration Register (Config_Reg) to the link partner.
• Data (/D/), A data code-group, when not used to distinguish or convey information for a defined ordered_set, conveys one octet of arbitrary data between the MAC and the PCS.

In the present document, a system and method for enabling neighbor discovery between a device and an OTN cross-connect which are connected via Ethernet has been described. The proposed method and system allows for an efficient network diagnosis and maintenance.

It should be noted that the description and drawings merely illustrate the principles of the proposed methods and systems. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader In understanding the principles of the proposed methods and systems and the concepts contributed by the inventors to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

Furthermore, it should be noted that steps of various above-described methods and components of described systems can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

In addition, it should be noted that the functions of the various elements described in the present patent document may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller"' should not be construed to refer exclusively to hardware capable of executing software, and may implicitly include, without limitation, digital-signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included.

Finally, it should be noted that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

## Claims

1. A method of discovering adjacencies in a optical transport network, wherein a client layer device (10) is connected over an Ethernet connection (12) to a transport network device (11), the transport network device (11) transparently mapping Ethernet packets to multiplex units and vice versa, the method comprising:
determining (21), by a first of the devices (10,11), that a port (14) of the transport network device (11) is connected via the Ethernet connection (12) to a port (13) of the client layer device (10); and
sending (23), by the first device, a link configuration pattern over the Ethernet connection (12), the link configuration pattern being one of: a predetermined bit sequence, an invalid Ethernet packet and a valid Ethernet packet, wherein an invalid Ethernet packet is a packet that would normally be discarded according to the Ethernet protocol, the link configuration pattern containing a device identifier identifying the first device and a port identifier identifying the port of the first device.

2. The method of claim 1, further comprising:
receiving (31), by a second of the devices (10, 11), the link configuration pattern;
determining (32), from the received link configuration pattern, the device identifier identifying the first device and the port identifier identifying the port of the first device; and
sending (33), by the second device, a further link configuration pattern to the first device, the further link configuration pattern being one of: a bit sequence, an invalid Ethernet packet and a valid Ethernet packet, the link configuration pattern containing a device identifier identifying the second device and a port identifier identifying the port of the second device.

3. The method of claim 2, further comprising:
receiving (41), by the first device, the further link configuration pattern sent by the second device; and
determining (42), by the first device, the device identifier identifying the second device and the port identifier identifying the port of the second device from the further link configuration pattern.

4. The method of claim 1, further comprising the following before the sending activity (23):
generating the link configuration pattern to be a series of one of: a bit sequence, an invalid Ethernet packet and a valid Ethernet packet,
every element of the series containing a device identifier identifying the sending device and a port identifier identifying the port of the sending device.

5. The method of claim 2, further comprising the following before the sending activity (33):
generating the further link configuration pattern to be a series of one of: a bit sequence, an invalid Ethernet packet and a valid Ethernet packet, every element of the series containing a device identifier identifying the sending device and a port identifier identifying the port of the sending device.

6. The method of claim 2, wherein the first device is the transport network device (11) and the second device is the client layer device (10).

7. The method of claim 2, wherein the elements of the further link
configuration pattern further include the device identifier identifying the first device and the port identifier identifying the port of the first device as received by the second device with the link configuration pattern.

8. The method of claim 7, further comprising:
storing, from the received further link configuration pattern, the device identifier identifying the first device, the port identifier identifying the port of the first device, the device identifier identifying the second device, and the port identifier identifying the port of the second device in a register of the first device.

9. The method of claim 6, further comprising:
determining (22), by the transport network device (11), that no port of the transport network device (11) is connected to another transport network device.

10. The method of claim 7, further comprising:
determining, by the first device, whether the device identifier identifying the first device and the port identifier identifying the port of the first device which were received by the first device with the further link configuration pattern correspond to the device identifier identifying the first device and the port identifier identifying the port of the first device which were sent by the first device with the link configuration pattern; and
if the device identifier identifying the first device and the port identifier identifying the port of the first device which were received by the first device correspond to the device identifier identifying the first device and the port identifier identifying the port of the first device which were sent by the first device, enabling the Ethernet connection for data traffic.

11. A transport network device (11) in an optical network, connected over an Ethernet connection (12) to a client layer device (10), the transport network device (11) transparently mapping Ethernet packets to multiplex units and vice versa, the transport network device (11) comprising:
a first multitude of ports (16), where a port (14) of the first multitude of ports is connected by the Ethernet connection (12) to the client layer device (10);
a second multitude of ports provided for establishing at least one optical link to at least one other transport network device; and
a link configuration pattern generator coupled to the first and second multitude of ports, said link configuration pattern generator being configured to determine whether a signal is received at the port (14) of the first multitude of ports (16), and configured to control the port (14) of the first multitude of ports (16) to send a link configuration pattern, the link configuration pattern being one of: a predetermined bit sequence, an invalid Ethernet packet and a valid Ethernet packet, wherein an invalid Ethernet packet is a packet that would normally be discarded according to the Ethernet protocol, the link configuration pattern containing a device identifier identifying the transport network device (11) and a port identifier identifying the port (14) of the transport network device (11).

12. The transport network device (11) of claim 11, comprising:
a link configuration pattern handler configured to determine whether a link configuration pattern is being received at the port (14) of the transport network device (11) from the client layer device (10), and
configured to determine the device identifier identifying the client layer device (10) and the port identifier identifying the port (13) of the client layer device (11) from a received link configuration pattern.

13. the transport network device (11) of claim 11 or 12, wherein the transport network device (11) is configured as an Optical Transport Network, OTN, device, or as a Synchronous Digital Hierarchy, SDH, network device.

14. A client layer device (10) that is coupled over an Ethernet connection (12) to a transport network device (11), the client layer device (10) comprising:
a port (13) connected via the Ethernet connection (12) to a port (14) of the transport network device (11); and
a link configuration pattern generator configured to control the port (13) of the client layer device (10) to send a link configuration pattern, the link configuration pattern being one of: a bit sequence, an invalid Ethernet packet and a valid Ethernet packet, wherein an invalid Ethernet packet is a packet that would normally be discarded according to the Ethernet protocol the link configuration pattern containing a device identifier identifying the client layer device (10) and a port identifier identifying the port (13) of the client layer device (11).

15. The client layer device (10) of claim 14, further comprising:
a link configuration pattern handler coupled to the port (13) of the client layer device (10), said link configuration pattern handler being configured to determine whether a link configuration pattern is being received at the port (13) of the client layer device (10), and
configured to determine a device identifier identifying the transport network device (11) and a port identifier identifying the port (14) of the transport network device (11) from a received link configuration pattern.

## Patentansprüche

1. Verfahren zur Erkennung von Nachbarschaften in einem optischen Transportnetzwerk, wobei eine Client-Schicht-Vorrichtung (10) über eine Ethernet-Verbindung (12) mit einer Transportnetzwerkvorrichtung (11) verbunden ist, wobei die Transportnetzwerkvorrichtung (11) Ethernet-Pakete transparent auf Multiplex-Einheiten abbildet, und umgekehrt, wobei das Verfahren umfasst:
Bestimmen (21), durch eine erste der Vorrichtungen (10, 11), dass ein Port (14) der Transportnetzwerkvorrichtung (11) über die Ethernet-Verbindung (12) mit einem Port (13) der Client-Schicht-Vorrichtung (10) verbunden ist; und Senden (23), durch die erste Vorrichtung, eines Link-Konfigurationsmusters über die Ethernet-Verbindung (12), wobei das Link-Konfigurationsmuster entweder eine vorbestimmte Bitsequenz, ein ungültiges Ethernet-Paket oder ein gültiges Ethernet-Paket ist, wobei ein ungültiges Ethernet-Paket ein Paket ist, welches normalerweise gemäß dem Ethernet-Protokoll verworfen werden würde, wobei das Link-Konfigurationsmuster eine Vorrichtungskennung, welche die erste Vorrichtung identifiziert, und eine Port-Kennung, welche den Port der ersten Vorrichtung identifiziert, enthält.

2. Verfahren nach Anspruch 1, weiterhin umfassend:
Empfangen (31), an einer zweiten der Vorrichtungen (10, 11), des Link-Konfigurationsmusters;
Ermitteln (32), aus dem empfangenen Link-Konfigurationsmuster, der Vorrichtungskennung, welche die erste Vorrichtung identifiziert, und der Port-Kennung, welche den Port der ersten Vorrichtung identifiziert; und
Senden (33), durch die zweite Vorrichtung, eines weiteren Link-Konfigurationsmusters an die erste Vorrichtung, wobei das Link-Konfigurationsmuster entweder eine Bitsequenz, ein ungültiges Ethernet-Paket oder ein gültiges Ethernet-Paket ist, wobei das Link-Konfigurationsmuster eine Vorrichtungskennung, welche die zweite Vorrichtung identifiziert, und eine Port-Kennung, welche den Port der zweiten Vorrichtung identifiziert, enthält.

3. Verfahren nach Anspruch 2, weiterhin umfassend:
Empfangen (41), an der ersten Vorrichtung, des von der zweiten Vorrichtung gesendeten weiteren Link-Konfigurationsmusters; und
Ermitteln (42), durch die erste Vorrichtung, der Vorrichtungskennung, welche die zweite Vorrichtung identifiziert, und der Port-Kennung, welche den Port der zweiten Vorrichtung identifiziert, aus dem weiteren Link-Konfigurationsmuster.

4. Verfahren nach Anspruch 1, weiterhin umfassend, vor dem Sendevorgang (23):
Erzeugen des Link-Konfigurationsmuster als eine Folge von entweder einer Bitsequenz, eines ungültigen Ethernet-Pakets oder eines gültigen Ethernet-Pakets, wobei jedes Element der Folge eine Vorrichtungskennung, welche die sendende Vorrichtung identifiziert, und eine Port-Kennung, welche den Port der sendenden Vorrichtung identifiziert, enthält.

5. Verfahren nach Anspruch 2, weiterhin umfassend, vor dem Sendevorgang (33):
Erzeugen des weiteren Link-Konfigurationsmuster als eine Folge von entweder einer Bitsequenz, eines ungültigen Ethemet-Pakets oder eines gültigen Ethernet-Pakets, wobei jedes Element der Folge eine Vorrichtungskennung, welche die sendende Vorrichtung identifiziert, und eine Port-Kennung, welche den Port der sendenden Vorrichtung identifiziert, enthält.

6. Verfahren nach Anspruch 2, wobei die erste Vorrichtung die Transportnetzwerkvorrichtung (11) ist, und die zweite Vorrichtung die Client-Schicht-Vorrichtung (10) ist.

7. Verfahren nach Anspruch 2, wobei die Elemente des weiteren Link-Konfigurationsmusters die Vorrichtungskennung, welche die erste Vorrichtung identifiziert, und die Port-Kennung, welche den Port der ersten Vorrichtung identifiziert und welche mit dem Link-Konfigurationsmuster an der zweiten Vorrichtung empfangen wurden, enthalten.

8. Verfahren nach Anspruch 7, weiterhin umfassend:
Speichern, aus dem empfangenen weiteren Link-Konfigurationsmuster, der Vorrichtungskennung, welche die erste Vorrichtung identifiziert, der Port-Kennung, welche den Port der ersten Vorrichtung identifiziert, der Vorrichtungskennung, welche die zweite Vorrichtung identifiziert, und der Port-Kennung, welche den Port der zweiten Vorrichtung identifiziert, in einem Register der ersten Vorrichtung.

9. Verfahren nach Anspruch 6, weiterhin umfassend:
Bestimmen (22), durch die Transportnetzwerkvorrichtung (11), dass kein Port der Transportnetzwerkvorrichtung (11) mit einer anderen Transportnetzwerkvorrichtung verbunden ist.

10. Verfahren nach Anspruch 7, weiterhin umfassend:
Ermitteln durch die erste Vorrichtung, ob die Vorrichtungskennung, welche die erste Vorrichtung identifiziert, und die Port-Kennung, welche den Port der ersten Vorrichtung identifiziert und welche mit dem weiteren Link-Konfigurationsmuster an der ersten Vorrichtung empfangen wurden, der Vorrichtungskennung, welche die erste Vorrichtung identifiziert, und der Port-Kennung, welche den Port der ersten Vorrichtung identifiziert und welche mit dem Link-Konfigurationsmuster von der ersten Vorrichtung gesendet wurden, entsprechen; und
wenn die Vorrichtungskennung, welche die erste Vorrichtung identifiziert, und die Port-Kennung, welche den Port der ersten Vorrichtung identifiziert und welche an der ersten Vorrichtung empfangen wurden, der Vorrichtungskennung, welche die erste Vorrichtung identifiziert, und der Port-Kennung, welche den Port der ersten Vorrichtung identifiziert und welche von der ersten Vorrichtung gesendet wurden, entsprechen, Freigeben der Ethernet-Verbindung für den Datenverkehr.

11. Transportnetzwerkvorrichtung (11) in einem optischen Netzwerk, welche über eine Ethernet-Verbindung (12) mit einer Client-Schicht-Vorrichtung (10) verbunden ist, wobei die Transportnetzwerkvorrichtung (11) Ethernet-Pakete auf Multiplex-Einheiten transparent abbildet, und umgekehrt, wobei die Transportnetzwerkvorrichtung (11) umfasst:
Eine erste Vielzahl von Ports (16), wobei ein Port (14) der ersten Vielzahl von Ports über die Ethernet-Verbindung (12) mit der Client-Schicht-Vorrichtung (10) verbunden ist;
eine zweite Vielzahl von Ports, welche für das Herstellen mindestens eines optischen Links zu mindest einer anderen Transportnetzwerkvorrichtung bereitgestellt werden; und
einen Link-Konfigurationsmustergenerator, welcher an die erste und die zweite Vielzahl von Ports gekoppelt ist, wobei der besagte Link-Konfigurationsmustergenerator dafür konfiguriert ist, zu ermitteln, ob ein Signal an dem Port (14) der ersten Vielzahl von Ports (16) empfangen wird, und dafür konfiguriert ist, den Port (14) der ersten Vielzahl von Ports (16) zu steuern, um ein Link-Konfigurationsmuster zu senden, wobei das Link-Konfigurationsmuster entweder eine vorbestimmte Bitsequenz, ein ungültiges Ethernet-Paket oder ein gültiges Ethernet-Paket ist, wobei ein ungültiges Ethernet-Paket ein Paket ist, welches normalerweise gemäß dem Ethernet-Protokoll verworfen werden würde, wobei das Link-Konfigurationsmuster eine Vorrichtungskennung, welche die Transportnetzwerkvorrichtung (11) identifiziert, und eine Port-Kennung, welche den Port (14) der Transportnetzwerkvorrichtung (11) identifiziert, enthält.

12. Transportnetzwerkvorrichtung (11) nach Anspruch 11, umfassend:
Einen Link-Konfigurationsmuster-Handler, welcher dafür konfiguriert ist, zu ermitteln, ob ein Link-Konfigurationsmuster von der Client-Schicht-Vorrichtung (10) an dem Port (14) der Transportnetzwerkvorrichtung (11) empfangen wird, und dafür konfiguriert ist, die Vorrichtungskennung, welche die Client-Schicht-Vorrichtung (10) identifiziert, und die Port-Kennung, welche den Port (13) der Client-Schicht-Vorrichtung (11) identifiziert, aus einem empfangenen Link-Konfigurationsmuster zu ermitteln.

13. Transportnetzwerkvorrichtung (11) nach Anspruch 11 oder 12, wobei die Transportnetzwerkvorrichtung (11) als eine Vorrichtung eines optischen Transportnetzwerks, OTN, oder als eine Vorrichtung eines Netzwerks mit synchroner digitaler Hierarchie, SDH, konfiguriert ist.

14. Client-Schicht-Vorrichtung (10), welche über eine Ethernet-Verbindung (12) an eine Transportnetzwerkvorrichtung (11) gekoppelt ist, wobei die Client-Schicht-Vorrichtung (10) umfasst:
Einen Port (13), welcher über die Ethernet-Verbindung (12) mit einem Port (14) der Transportnetzwerkvorrichtung (11) verbunden ist; und
einen Link-Konfigurationsmustergenerator, weicher für das Steuern des Ports (13) der Client-Schicht-Vorrichtung (10) zum Senden eines Link-Konfigurationsmusters konfiguriert ist, wobei das Link-Konfigurationsmuster entweder eine Bitsequenz,
ein ungültiges Ethernet-Paket oder ein gültiges Ethernet-Paket ist, wobei ein ungültiges Ethernet-Paket ein Paket ist, welches normalerweise gemäß dem Ethernet-Protokoll verworfen werden würde, wobei das Link-Konfigurationsmuster eine Vorrichtungskennung, welche die erste Client-Schicht-Vorrichtung (10) identifiziert, und eine Port-Kennung, welche den Port (13) der Client-Schicht-Vorrichtung (11) identifiziert, enthält.

15. Client-Schicht-Vorrichtung (10) nach Anspruch 14, weiterhin umfassend:
Link-Konfigurationsmuster-Handler, welcher an den Port (13) der Client-Schicht-Vorrichtung (10) gekoppelt ist, wobei der besagte Link-Konfigurationsmuster-Handler dafür konfiguriert ist, zu ermitteln, ob ein Link-Konfigurationsmuster am Port (13) der Client-Schicht-Vorrichtung (10) empfangen wird, und dafür konfiguriert ist, eine Vorrichtungskennung, welche die Transportnetzwerkvorrichtung (11) identifiziert, und eine Port-Kennung, welche den Port (14) der Transportnetzwerkvorrichtung (11) identifiziert, aus einem empfangenen Link-Konfigurationsmuster zu ermitteln.

## Revendications

1. Procédé de découverte d'adjacences dans un réseau de transport optique, dans lequel un dispositif de couche client (10) est connecté via une connexion Ethernet (12) à un dispositif de réseau de transport (11), le dispositif de réseau de transport (11) mettant en correspondance de manière transparente des paquets Ethernet avec des unités de multiplexage et vice versa, le procédé comprenant les étapes suivantes :
déterminer (21), par un premier des dispositifs (10, 11), qu'un port (14) du dispositif de réseau de transport (11) est connecté via la connexion Ethernet (12) à un port (13) du dispositif de couche client (10) ; et envoyer (23), par le premier dispositif, un modèle de configuration de liaison via la connexion Ethernet (12), le modèle de configuration de liaison étant un élément parmi : une séquence de bits prédéterminée, un paquet Ethernet non valide et un paquet Ethernet valide, dans lequel un paquet Ethernet non valide est un paquet qui serait normalement éliminé conformément au protocole Ethernet, le modèle de configuration de liaison contenant un identifiant de dispositif identifiant le premier dispositif et un identifiant de port identifiant le port du premier dispositif.

2. Procédé selon la revendication 1, comprenant en outre les étapes suivantes :
recevoir (31), par un deuxième des dispositifs (10, 11), le modèle de configuration de liaison ;
déterminer (32), à partir du modèle de configuration de liaison reçu, l'identifiant de dispositif identifiant le premier dispositif et l'identifiant de port identifiant le port du premier dispositif ; et
envoyer (33), par le deuxième dispositif, un autre modèle de configuration de liaison au premier dispositif, l'autre modèle de configuration de liaison étant un élément parmi : une séquence de bits, un paquet Ethernet non valide et un paquet Ethernet valide, le modèle de configuration de liaison contenant un identifiant de dispositif identifiant le deuxième dispositif et un identifiant de port identifiant le port du deuxième dispositif.

3. Procédé selon la revendication 2, comprenant en outre les étapes suivantes :
recevoir (41), par le premier dispositif, l'autre modèle de configuration de liaison envoyé par le deuxième dispositif ; et
déterminer (42), par le premier dispositif, l'identifiant de dispositif identifiant le deuxième dispositif et l'identifiant de port identifiant le port du deuxième dispositif à partir de l'autre modèle de configuration de liaison.

4. Procédé selon la revendication 1, comprenant en outre ce qui suit avant l'envoi (23) :
générer le modèle de configuration de liaison comme étant une série d'un élément parmi : une séquence de bits, un paquet Ethernet non valide et un paquet Ethernet valide, chaque élément de la série contenant un identifiant de dispositif identifiant le dispositif d'envoi et un identifiant de port identifiant le port du dispositif d'envoi.

5. Procédé selon la revendication 2, comprenant en outre ce qui suit avant l'envoi (33) :
générer l'autre modèle de configuration de liaison comme étant une série d'un élément parmi : une séquence de bits, un paquet Ethernet non valide et un paquet Ethernet valide, chaque élément de la série contenant un identifiant de dispositif identifiant le dispositif d'envoi et un identifiant de port identifiant le port du dispositif d'envoi.

6. Procédé selon la revendication 2, dans lequel le premier dispositif est le dispositif de réseau de transport (11) et le deuxième dispositif est le dispositif de couche client (10).

7. Procédé selon la revendication 2, dans lequel les éléments de l'autre modèle de configuration de liaison comprennent en outre l'identifiant de dispositif identifiant le premier dispositif et l'identifiant de port identifiant le port du premier dispositif tels qu'ils sont reçus par le deuxième dispositif avec le modèle de configuration de liaison.

8. Procédé selon la revendication 7, comprenant en outre les étapes suivantes :
stocker, à partir de l'autre modèle de configuration de liaison reçu, l'identifiant de dispositif identifiant le premier dispositif, l'identifiant de port identifiant le port du premier dispositif, l'identifiant de dispositif identifiant le deuxième dispositif, et l'identifiant de port identifiant le port du deuxième dispositif dans un registre du premier dispositif.

9. Procédé selon la revendication 6, comprenant en outre l'étape suivante :
déterminer (22), par le dispositif de réseau de transport (11), qu'aucun port du dispositif de réseau de transport (11) n'est connecté à un autre dispositif de réseau de transport.

10. Procédé selon la revendication 7, comprenant en outre les étapes suivantes :
déterminer, par le premier dispositif, si l'identifiant de dispositif identifiant le premier dispositif et l'identifiant de port identifiant le port du premier dispositif qui ont été reçus par le premier dispositif avec l'autre modèle de configuration de liaison correspondent à l'identifiant de dispositif identifiant le premier dispositif et à l'identifiant de port identifiant le port du premier dispositif qui ont été envoyés par le premier dispositif avec le modèle de configuration de liaison ; et
si l'identifiant de dispositif identifiant le premier dispositif et l'identifiant de port identifiant le port du premier dispositif qui ont été reçus par le premier dispositif correspondent à l'identifiant de dispositif identifiant le premier dispositif et à l'identifiant de port identifiant le port du premier dispositif qui ont été envoyés par le premier dispositif, activer la connexion Ethernet pour le trafic de données.

11. Dispositif de réseau de transport (11) dans un réseau optique, connecté via une connexion Ethernet (12) à un dispositif de couche client (10), le dispositif de réseau de transport (11) mettant en correspondance de manière transparente des paquets Ethernet avec des unités de multiplexage et vice versa, le dispositif de réseau de transport (11) comprenant :
une première multitude de ports (16), où un port (14) de la première multitude de ports est connecté par la connexion Ethernet (12) au dispositif de couche client (10) ;
une deuxième multitude de ports prévus pour établir au moins une liaison optique avec au moins un autre dispositif de réseau de transport ; et
un générateur de modèles de configuration de liaison couplé à la première et à la deuxième multitude de ports, ledit générateur de modèles de configuration de liaison étant configuré pour déterminer si un signal est reçu au niveau du port (14) de la première multitude de ports (16), et configuré pour commander le port (14) de la première multitude de ports (16) pour envoyer un modèle de configuration de liaison, le modèle de configuration de liaison étant un élément parmi : une séquence de bits prédéterminée, un paquet Ethernet non valide et un paquet Ethernet valide, dans lequel un paquet Ethernet non valide est un paquet qui serait normalement éliminé conformément au protocole Ethernet, le modèle de configuration de liaison contenant un identifiant de dispositif identifiant le dispositif de réseau de transport (11) et un identifiant de port identifiant le port (14) du dispositif de réseau de transport (11).

12. Dispositif de réseau de transport (11) selon la revendication 11, comprenant :
un gestionnaire de modèles de configuration de liaison configuré pour déterminer si un modèle de configuration de liaison est reçu au niveau du port (14) du dispositif de réseau de transport (11) à partir du dispositif de couche client (10), et
configuré pour déterminer l'identifiant de dispositif identifiant le dispositif de couche client (10) et l'identifiant de port identifiant le port (13) du dispositif de couche client (11) à partir d'un modèle de configuration de liaison reçu.

13. Dispositif de réseau de transport (11) selon la revendication 11 ou 12, dans lequel le dispositif de réseau de transport (11) est configuré comme un dispositif de réseau de transport optique, OTN, ou comme un dispositif de réseau de hiérarchie numérique synchrone, SDH.

14. Dispositif de couche client (10) qui est couplé via une connexion Ethernet (12) à un dispositif de réseau de transport (11), le dispositif de couche client (10) comprenant :
un port (13) connecté via la connexion Ethernet (12) à un port (14) du dispositif de réseau de transport (11) ; et
un générateur de modèles de configuration de liaison configuré pour commander le port (13) du dispositif de couche client (10) pour envoyer un modèle de configuration de liaison, le modèle de configuration de liaison étant un élément parmi : une séquence de bits, un paquet Ethernet non valide et un paquet Ethernet valide, dans lequel un paquet Ethernet non valide est un paquet qui serait normalement éliminé conformément au protocole Ethernet, le modèle de configuration de liaison contenant un identifiant de dispositif identifiant le dispositif de couche client (10) et un identifiant de port identifiant le port (13) du dispositif de couche client (11).

15. Dispositif de couche client (10) selon la revendication 14, comprenant en outre :
un gestionnaire de modèles de configuration de liaison couplé au port (13) du dispositif de couche client (10), ledit gestionnaire de modèles de configuration de liaison étant configuré pour déterminer si un modèle de configuration de liaison est reçu au niveau du port (13) du dispositif de couche client (10), et configuré pour déterminer un identifiant de dispositif identifiant le dispositif de réseau de transport (11) et un identifiant de port identifiant le port (14) du dispositif de réseau de transport (11) à partir d'un modèle de configuration de liaison reçu.
